# EUROPÄISCHE PATENTSCHRIFT

(11) **EP 1 232 032 B1**
(45) Veröffentlichungstag und Bekanntmachung des Hinweises auf die Patenterteilung: **31.03.2004**
(21) Anmeldenummer: 00987063.5
(22) Anmeldetag: 02.11.2000
(51) Int. Cl.: B23B 27/00, B23Q 17/22

(54) **VERFAHREN ZUR SPANENDEN BEARBEITUNG ELEKTRISCH LEITFÄHIGER WERKSTÜCKE MIT EINEM WERKZEUG**
METHOD FOR MACHINING ELECTRICALLY CONDUCTIVE WORKPIECES
PROCEDE POUR L'USINAGE PAR ENLEVEMENT DE COPEAUX DE PIECES ELECTROCONDUCTRICES

(30) Priorität: 02.11.1999 DE 19952807
(43) Veröffentlichungstag der Anmeldung: 21.08.2002
(73) Patentinhaber: Müller, Roland, 66453 Gersheim (DE)
(72) Erfinder: Müller, Roland, 66453 Gersheim (DE)
(86) Internationale Anmeldenummer: PCT/DE2000/003849
(87) Internationale Veröffentlichungsnummer: WO 2001/032338

(56) Entgegenhaltungen:
- DE-A- 19 633 942
- DE-A- 19 727 094
- GB-A- 2 319 615

## Beschreibung

Die Erfindung betrifft ein Verfahren zur spanenden Bearbeitung elektrisch leitfähiger Werkstücke mit einem Werkzeug. Sie betrifft auch die Verwendung eines Werkzeuges zum spanabhebenden Bearbeiten eines elektrisch leitfähigen Werkstücks bzw. einer Halterung für ein spanabhebend zu bearbeitendes Werkstück sowie die Anwendung des Verfahrens zur spanenden Bearbeitung.

Die spanabhebende Bearbeitung elektrisch leitfähiger Werkstücke ist weit verbreitet. So werden insbesondere mittels Dreh- und Fräsmaschinen metallische Werkstücke verarbeitet. Aber auch für Kunststoffe, von denen es auch elektrisch leitfähige gibt, können spanabhebende Bearbeitungsverfahren in Frage kommen.

Beim spanabhebenden Bearbeiten mit bekannten Vorrichtungen wird das zu bearbeitende Werkstück in eine Halterung der Vorrichtung eingespannt und danach die spanabhebende Bearbeitung durch die Bedienperson durchgeführt. Dies erfordert auch bei einfachen Werkstücken zumindest Grundkenntnisse der spanabhebenden Bearbeitung und die Anwesenheit der Bedienperson während des Bearbeitungsvorganges. Diese Art der spanabhebenden Bearbeitung ist bei Einzelstücken, Kleinserien und dem Überarbeiten von Werkstücken, z.B. dem Abdrehen bereits benutzter Bremsscheiben und -trommeln sinnvoll.

Es gibt auch automatische Vorrichtungen zur spanabhebenden Bearbeitung, die in Abwesenheit des Bedienpersonals ein vorher eingegebenes Bearbeitungsprogramm durchführen. Der Einsatz dieser Vorrichtungen ist jedoch nur bei großen Stückzahlen gleicher Werkstücke oder aber bei aufwendigen Spezialteilen wirtschaftlich sinnvoll.

Insbesondere beim Überarbeiten von Werkstücken, um bei diesen die Oberfläche zu glätten, ist es in der Regel erforderlich, daß die Bedienperson eine optische Kontrolle der überarbeiteten Oberfläche vornimmt, um festzustellen, ob eine weitere Überarbeitung erforderlich ist. Hierzu muß häufig das Werkstück aus der Halterung herausgenommen werden, was zeitaufwendig ist und zudem werden häufig aufgrund der schlechten Lichtverhältnisse noch bestehende Oberflächenfehler nicht erkannt.

Die DE 10 85 009 B beschreibt eine Einrichtung zur Standzeitverlängerung von in Werkzeugmaschinen verwendeten Hartmetallwerkzeugen, wobei versucht wird, Thermoströme, die an der Bearbeitungsstelle zwischen Werkstück und Werkzeug entstehen, zu kompensieren.

Aus der US-A-5,802,937 ist ein Verfahren zum nanometergenauen spanenden Bearbeiten von Werkstücken bekannt, wobei ein Stromkreis zwischen Werkstück und Werkzeug geschlossen wird und durch einen Abgleich zwischen Ist- und Sollgröße in dem Stromkreis die Spantiefe des Werkzeuges geregelt wird.

In der DE 196 33 942 A1 wird ein Halter, insbesondere für eine Werkzeugschneide zur Verwendung in Fertigungs- und/oder Bearbeitungsmaschinen beschrieben, der eine elektrische Leitfähigkeit besitzt und zumindest teilweise eine elektrisch isolierende Beschichtung auf seiner Oberfläche aufweist, um den Eingriff der Werkzeugschneide in ein Werkstück mittels einer elektrischen Kontaktmessung zwischen diesen beiden feststellen zu können.

Aufgabe der Erfindung ist es daher, ein Verfahren zu schaffen, mit dem die Oberflächenbearbeitung bei Erreichen einer vorgegebenen Oberflächengüte beendet werden kann.

Diese Aufgabe wird erfindungsgemäß dadurch gelöst, daß zwischen dem Werkzeug und dem dazu elektrisch isolierten zu bearbeitenden Werkstück während des spanabhebenden Bearbeitungsvorganges ein Stromkreis geschlossen wird, wobei mindestens eine elektrische Größe in dem Stromkreis über die Dauer des Bearbeitungsvorgangs ermittelt und ausgewertet wird, daß ein Zustellen des Werkzeuges nach jeweils einem Bearbeitungsschritt der gesamten Oberfläche erfolgt und daß der Bearbeitungsvorgang beendet wird, wenn während eines Bearbeitungsschrittes bei mindestens einer konstanten elektrischen Eingangsgröße eine ausreichende Konstanz der ermittelten elektrischen Größe zwischen Werkzeug und Werkstück gegeben ist.

Im Rahmen der Erfindung wurde festgestellt, daß bei einem derartigen Stromkreis zwischen dem Werkzeug und dem zu bearbeitenden Werkstück aufgrund des sprunghaft ansteigenden Widerstandes im Bereich von Unebenheiten an der zu bearbeitenden Oberfläche das über einen Bearbeitungsvorgang ermittelte Signal eine gute Abbildung der bereits erreichten Oberflächengüte ist. Hierbei kann im Rahmen eines Eichvorganges ermittelt werden, welcher Grad von Konstanz für die jeweils gewünschte Oberflächenqualität erforderlich ist. Ist diese Oberflächenqualität erreicht, wird der Bearbeitungsvorgang beendet.

Erfindungsgemäß ist vorgesehen, daß in Abhängigkeit von der elektrischen Eingangsspannung oder -stromstärke die Spannung, die Stromstärke oder der Widerstand in dem geschlossenen Stromkreis ermittelt wird.

Es hat sich als zweckmäßig herausgestellt, daß die Eingangsstromstärke bis zu 50 mA beträgt.

Es liegt im Rahmen der Erfindung, daß eine Eingangsspannung von bis zu 24 V angelegt wird.

Es ist vorteilhaft, daß die Beaufschlagung mit elektrischem Strom im Bereich des Werkzeugs oder im Bereich der Halterung des zu bearbeitenden Werkstücks erfolgt.

Ebenso ist es erfindungsgemäß, daß die Ermittlung der elektrischen Größe im Bereich des Werkzeugs oder im Bereich der Halterung des zu bearbeitenden Werkstücks erfolgt.

Eine Ausbildung der Erfindung besteht darin, daß das Werkzeug ein Drehmeißel ist.

Im Rahmen der Erfindung liegt auch die Verwendung eines Werkzeuges zum spanabhebenden Bearbeiten eines elektrisch leitfähigen Werkstücks, wobei im Bereich des Werkzeuges Mittel zum Beaufschlagen mit elektrischem Strom oder Mittel zum Ermitteln einer elektrischen Größe vorgesehen sind in einem erfindungsgemäßen Verfahren.

Eine Ausbildung der Erfindung besteht darin, daß das Werkzeug ein Drehmeißel ist.

Auch die Verwendung einer Halterung für ein spanabhebend zu bearbeitendes Werkstück, wobei im Bereich der Halterung Mittel zum Beaufschlagen mit elektrischem Strom oder Mittel zum Ermitteln einer elektrischen Größe vorgesehen sind, in einem erfindungsgemäßen Verfahren liegt ebenfalls im Rahmen der Erfindung.

Schließlich ist auch die Anwendung des Verfahrens gemäß der Verfahrensansprüche zum spanabhebenden Bearbeiten von zylindrischen Werkstücken, insbesondere von Bremsscheiben und Bremstrommeln erfindungsgemäß.

Die Vorteile der Erfindung bestehen im wesentlichen darin, daß es ermöglicht wird, während des spanenden Berbeitungsvorgangs und mit großer Präzision noch bestehende Unebenheiten, wie Riefen, des zu bearbeitenden Gegenstandes festzustellen und direkt in Abhängigkeit vom Zustand des zu bearbeitenden Gegenstandes Einfluß auf den Bearbeitungsprozeß zu nehmen, insbesondere bei Erreichen der gewünschten Oberflächenqualität die Bearbeitung zu beenden.

Zudem besteht die Möglichkeit, die Bearbeitungsmaschine zu schützen, indem bei Ermitteln einer auf einen elektrisch leitfähigen Körper hinweisenden elektrischen Größe in einem Bereich, in dem ein solcher Körper nicht erwartet wird (z.B. in einem Bereich, in den der Drehmeißel vorgefahren werden soll), eine automatische Abschaltung oder eine Bestätigungsanfrage erfolgt.

Im folgenden werden Ausführungsbeispiele der Erfindung anhand von Zeichnungen erläutert.

Es zeigen
- Fig. 1: eine perspektivische Ansicht eines Ausführungsbeispiels eines erfindungsgemäßen Werkzeugs,
- Fig. 2a bis Fig. 2c: Darstellungen von mit einem Werkzeug gemäß Fig. 1 aufgenommenen Weg-Spannungs-Kurven.

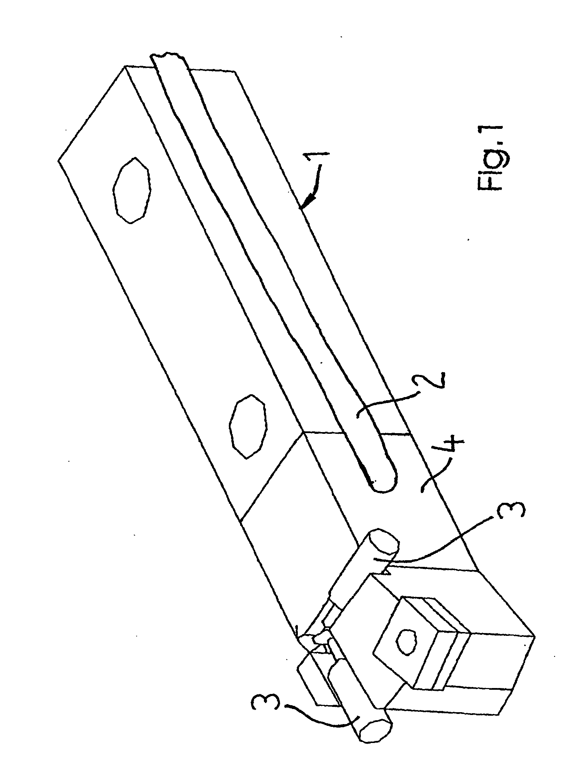

Das Werkzeug weist Mittel 2 zum Beaufschlagen des Werkzeuges 1, hier eines Drehmeißels 1, mit elektrischem Strom einer Spannung von vorzugsweise etwa 5 V auf Diese Spannung wird von dem elektrisch leitfähigen Drehmeißel 1 auf das ebenfalls elektrisch leitfähige, aber zu dem Drehmeißel 1 isolierten, zu bearbeitende Werkstück geleitet, welches in einer ebenfalls elektrisch leitfähigen Halterung befestigbar ist. Die Beaufschlagung mit elektrischem Strom kann im Bereich des Werkzeuges 1 (z.B. wie in Fig. 1 dargestellt, im vorderen Bereich 4 des Werkzeuges, der von dem hinteren Bereich elektrisch isoliert ist) oder aber des zu bearbeitenden Werkstücks erfolgen. Es wird bevorzugt, im Bereich des Werkzeuges 1 eine konstante Spannung von ca. 5 V vorzugsweise mit nachfolgendem Widerstand anzulegen und im Bereich des Werkstückes bzw. der Halterung die verbleibende Spannung bzw. den Widerstand zu messen.

Während des spanabhebenden Bearbeitungsvorganges wird der Stromkreis zwischen dem Drehmeißel 1 und dem Werkstück geschlossen. Trifft der Drehmeißel 1 auf eine Riefe in der Oberfläche des Werkstücks, wird der Kontakt zwischen Drehmeißel 1 und dem Werkstück unterbrochen und der Widerstand steigt sprungartig an. Diesen Effekt nutzt die erfindungsgemäße Vorrichtung, indem durch eine Messung über den Bearbeitungsvorgang hinweg festgestellt wird, ob noch signifikante Sprünge vorliegen und aufgrund des Ergebnisses dieser Messungen der spanabhebende Bearbeitungsvorgang fortgesetzt, wiederholt oder unterbrochen wird.

Es ist hierbei möglich, bei einer gewissen, vorzugsweise konstanten Eingangsspannung oder -stromstärke die Spannung, die Stromstärke bzw. den Widerstand zwischen Werkzeug und Werkstück zu ermitteln.

Eine bevorzugte Weiterbildung der Erfindung besteht darin, daß der Drehmeißel 1 zusätzlich mit einer Abstandsmeßvorrichtung 3 versehen ist, die es ermöglicht, den Abstand des Drehmeißels 1 von dem Werkstück zu erfassen. Werden zwei derartige Drehmeißel 1 um 90° versetzt und vorzugsweise auf unabhängig voneinander verfahrbaren Schlitten angeordnet, so kann mit dem einen Drehmeißel 1 die Bearbeitung der Stirnseite eines zylindrischen Gegenstandes und mit dem anderen Drehmeißel 1 die Bearbeitung der Seitenflächen erfolgen. Es kann auch ein Drehmeißel 1 mit zwei um 90° zueinander versetzten Schneidklingen vorgesehen sein, mit dem die Bearbeitungsschritte nacheinander erfolgen.

Zudem können über die Abstandsmeßvorrichtungen 3 die Dimensionen (Durchmesser, Dicke) des Werkstückes erfaßt werden, indem die Drehmeißel 1 auf das zu bearbeitende Werkstück zu gefahren werden, bis der Abstand Null ist bzw. bis eine Abstandsmessung möglich ist. Aus dem hierbei zurückgelegten Weg und gegebenenfalls dem Ergebnis der Messung des noch verbleibenden Abstandes können dann die Dimensionen des zu bearbeitenden Gegenstandes ermittelt werden. Diese Abstandsmeßvorrichtungen 3 können auch dazu dienen, den Drehmeißel 1 rechtzeitig zu stoppen, bevor dieser (z.B. aufgrund eines Bedienfehlers) zu stark auf das Werkstück zugestellt wird und auf diese Weise Beschädigungen des Werkstücks und des Werkzeugs zu verhindern.

Im Zusammenspiel mit dem erfindungsgemäßen Detektionsverfahren ist auf diese Weise nach dem Einspannen des Werkstückes in die Halterung eine vollautomatische Bearbeitung von (insbesondere zylindrischen) Werkstücken auch unterschiedlicher Dimensionen (z.B. das Abdrehen von bereits benutzten Bremsscheiben oder -trommeln) vollautomatisch möglich, wie sie nachfolgend beschrieben wird.

Hierbei werden zunächst die Drehmeißel, von denen einer in der Achse des zu bearbeitenden Werkstücks und der andere in der Ebene des zu bearbeitenden Werkstücks angeordnet sind, durch einen Verfahrmechanismus auf das zu bearbeitende Werkstück hin bewegt, bis eine Durchmessermeßvorrichtung (z.B. eine Lichtschranke) den Durchmesser des zu bearbeitenden Werkstücks ermittelt hat. In dieser Position wird dann mindestens ein Verfahrmechanismus zu dem zu bearbeitenden Werkstück hin bewegt, bis die Abstandsmeßvorrichtung 3 einen definierten Abstand erreicht hat.

Anschließend wird das zu bearbeitende Werkstück in Drehung versetzt und unter langsamem seitlichem Verfahren der Abstandsmeßvorrichtungen 3 ermittelt, wann (über eine Umdrehung des Werkstücks hinweg) die Abstandsmeßvorrichtungen 3 jeweils permanent vor dem zu bearbeitenden Werkstück stehen. Auf diese Weise können die Unrundheit (Ovalität) und die Dickenschwankung bzw. der Seitenschlag (Unebenheit in Richtung der Ebene) des zu bearbeitenden Werkstücks ermittelt werden.

Schließlich erfolgt der eigentliche Bearbeitungsvorgang, bei dem im Bereich der Drehmeißel 1 eine Spannung von beispielsweise 5 V über einen Vorwiderstand angelegt wird und die Spannung zwischen Werkzeug und Werkstück ermittelt wird, während die Stirnseite und/oder die Seitenflächen des Werkstückes schichtweise abgetragen wird. Nach jeder Schicht erfolgt eine weitere Zustellung des Werkzeuges. Dies erfolgt, bis kein Spannungs- bzw. Widerstandssprung (aufgrund von noch vorhandenen Riefen) mehr auftritt bzw. bis die Spannungs- bzw. Widerstandssprünge unter einer Toleranzgrenze liegen. Dann ist die Bearbeitung beendet und die Drehmeißel 1 fahren in die Ausgangsposition zurück.

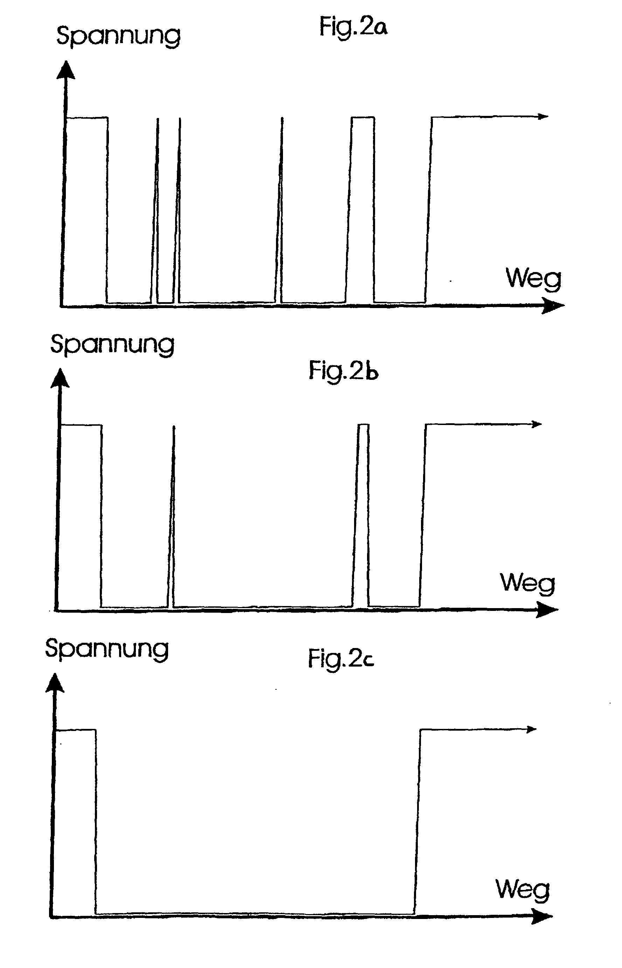

Die Fig. 2a bis 2c zeigen diese Schritte. In Fig. 2a, die das Spannungs-Weg-Diagramm über den Radius des zu bearbeitenden Werkstücks zu Beginn der spanenden Bearbeitung (bei Abtragung der ersten Oberflächenschicht) zeigt, liegen noch 3 kleinere Spannungssprünge und ein größerer Spannungssprung vor, die 3 kleineren und einer größeren Riefe in der Oberfläche des Werkstücks entsprechen. Während der Bearbeitung, beispielsweise bei Abtragung der zweiten Oberflächenschicht, ergibt sich das Spannungs-Weg-Diagramm gemäß Fig. 2b, wo nur noch eine der kleineren (die tiefste) und die größere Riefe durch entsprechende Spannungssprünge dokumentiert werden. Am Ende der Bearbeitung (z.B. nach Abtragung der dritten Oberflächenschicht) ergibt sich das Bild der Fig. 2c, wo keine Spannungssprünge mehr erkennbar sind.

Auf diese Weise wird ein einfaches, vollautomatisches Bearbeitungsverfahren geschaffen, das kein Programmieren der Bearbeitungsvorrichtung erfordert, das grundsätzlich keine Anwesenheit des Bedienpersonals erfordert (außer beim Ein- und Ausspannen des Werkstücks) und mit dem somit eine kostengünstige Bearbeitung mit gleichbleibender, objektiver Qualität auch bei unterschiedlichen Einzelstücken, wie beim Abdrehen bereits benutzter Bremsscheiben im Werkstattbetrieb möglich ist.

## Patentansprüche

1. Verfahren zur spanenden Bearbeitung elektrisch leitfähiger Werkstücke mit einem Werkzeug (1), wobei zwischen dem Werkzeug (1) und dem dazu elektrisch isolierten zu bearbeitenden Werkstück während des spanabhebenden Bearbeitungsvorganges ein Stromkreis geschlossen wird, wobei mindestens eine elektrische Größe in dem Stromkreis über die Dauer des Bearbeitungsvorgangs ermittelt und ausgewertet wird und ein Zustellen des Werkzeuges nach jeweils einem Bearbeitungsschritt der gesamten Oberfläche erfolgt, **dadurch gekennzeichnet, daß** der Bearbeitungsvorgang beendet wird, wenn während eines Bearbeitungsschrittes bei mindestens einer konstanten elektrischen Eingangsgröße eine ausreichende Konstanz der ermittelten elektrischen Größe zwischen Werkzeug (1) und Werkstück gegeben ist.

2. Verfahren gemäß Anspruch 1, **dadurch gekennzeichnet, daß** in Abhängigkeit von der elektrischen Eingangsspannung oder -stromstärke die Spannung, die Stromstärke oder der Widerstand in dem geschlossenen Stromkreis ermittelt wird.

3. Verfahren gemäß Anspruch 2, **dadurch gekennzeichnet, daß** die Eingangsstromstärke bis zu 50 mA beträgt.

4. Verfahren gemäß Anspruch 2, **dadurch gekennzeichnet, daß** eine Eingangsspannung von bis zu 24 V angelegt wird.

5. Verfahren gemäß Anspruch 1, **dadurch gekennzeichnet, daß** die Beaufschlagung mit elektrischem Strom im Bereich des Werkzeugs (1) oder im Bereich der Halterung des zu bearbeitenden Werkstücks erfolgt.

6. Verfahren gemäß Anspruch 1, **dadurch gekennzeichnet, daß** die Ermittlung der elektrischen Größe im Bereich des Werkzeugs (1) oder im Bereich der Halterung des zu bearbeitenden Werkstücks erfolgt.

7. Verfahren gemäß Anspruch 1, **dadurch gekennzeichnet, daß** das Werkzeug (1) ein Drehmeißel ist.

8. Verwendung eines Werkzeuges (1) zum spanabhebenden Bearbeiten eines elektrisch leitfähigen Werkstücks, wobei im Bereich des Werkzeuges (1) Mittel (2) zum Beaufschlagen mit elektrischem Strom oder Mittel zum Ermitteln einer elektrischen Größe vorgesehen sind, in einem Verfahren gemäß einem der Ansprüche 1 bis 7.

9. Verwendung gemäß Anspruch 8, **dadurch gekennzeichnet, daß** das Werkzeug (1) ein Drehmeißel (1) ist.

10. Verwendung einer Halterung für ein spanabhebend zu bearbeitendes Werkstück, wobei im Bereich der Halterung Mittel (2) zum Beaufschlagen mit elektrischem Strom oder Mittel zum Ermitteln einer elektrischen Größe vorgesehen sind in einem Verfahren gemäß einem der Ansprüche 1 bis 7.

11. Anwendung des Verfahrens gemäß der Ansprüche 1 bis 7 zum spanabhebenden Bearbeiten von zylindrischen Werkstücken, insbesondere von Bremsscheiben und Bremstrommeln.

## Claims

1. A method for machining electrically conductive workpieces with a tool (1), wherein an electrical circuit is completed between the tool (1) and the workpiece to be machined that is insulated therefrom during the machining operation, wherein at least one electrical value in the circuit is determined and evaluated for the duration of the machining operation and feeding of the workpiece takes place after completion of each machining operation over the entire length of the workpiece,
**characterized in that**
the machining operation is terminated when during a machining step sufficient constancy of the determined electrical value between tool (1) and workpiece is achieved for at least one constant electrical input value.

2. The method according to claim 1, **characterized in that** depending on the electrical input voltage or current strength, the voltage, the current strength or the resistance is determined in the closed circuit.

3. The method according to claim 2, **characterized in that** the input current strength is up to 50 mA.

4. The method according to claim 2, **characterized in that** the input voltage of up to 24 V is applied.

5. The method according to claim 1, **characterized in that** electrical current loading occurs in the area of the tool (1) or the area of the support for the workpiece to be machined.

6. The method according to claim 1, **characterized in that** the determination of the electrical value is made in the area of the tool (1) or the area of the support for the workpiece to be machined.

7. The method according to claim 1, **characterized in that** the tool (1) is a rotary chisel.

8. A use of a tool (1) for stock removal machining of an electrically conductive workpiece, wherein means (2) are provided in the area of the tool (1) for loading with an electrical current or means for determining an electrical value in accordance with claims 1 to 7.

9. The use according to claim 8, **characterized in that** the tool (1) is a rotary chisel.

10. The use of a support for a workpiece to be machined to remove stock, wherein means (2) are provided in the area of the support for loading with an electrical current or means for determining an electrical value in accordance with claims 1 to 7.

11. An application of the method according to claims 1 to 7 for machining for stock removal of cylindrical workpieces, particularly of brake disks and brake drums.

## Revendications

1. Procédé pour l'usinage par enlèvement de copeaux de pièces électroconductrices comportant un outil (1), un circuit de courant étant bouclé entre l'outil (1) et la pièce isolée par rapport à celui-ci à usiner pendant l'opération d'usinage par enlèvement de copeau, au moins une grandeur électrique étant déterminée et exploitée dans le circuit de courant pendant la durée de l'opération d'usinage et une passe de l'outil ayant lieu après respectivement une étape d'usinage de l'ensemble de la surface,
**caractérisé en ce que**
l'opération d'usinage se termine lorsque, pendant une étape d'usinage avec au moins une grandeur d'entrée électrique constante, une constance suffisante de la grandeur électrique déterminée est atteinte entre l'outil (1) et la pièce.

2. Procédé selon la revendication 1, **caractérisé en ce que**, en fonction de la tension ou de l'intensité de courant d'entrée, on détermine la tension, l'intensité de courant ou la résistance dans le cycle de courant fermé.

3. Procédé selon la revendication 2, **caractérisé en ce que** l'intensité de courant d'entrée va jusqu'à 50 mA.

4. Procédé selon la revendication 2, **caractérisé en ce qu'**une tension d'entrée allant jusqu'à 24 V est appliquée.

5. Procédé selon la revendication 1, **caractérisé en ce que** la sollicitation au courant électrique a lieu au niveau de l'outil (1) ou au niveau du support de la pièce à usiner.

6. Procédé selon la revendication 1, **caractérisé en ce que** la détermination de la grandeur électrique a lieu au niveau de l'outil (1) ou au niveau du support de la pièce à usiner.

7. Utilisation selon la revendication 1, **caractérisée en ce que** l'outil (1) est un burin rotatif.

8. Utilisation d'un outil (1) pour l'usinage par enlèvement de copeaux d'une pièce électroconductrice, étant prévus au niveau de la pièce (1) des moyens (2) pour la sollicitation au courant électrique ou des moyens pour la détermination d'une grandeur électrique, dans un procédé suivant l'une quelconque des revendications 1 à 7.

9. Utilisation selon la revendication 8, **caractérisée en ce que** l'outil (1) est un burin rotatif (1).

10. Utilisation d'un support pour outil à usiner par enlèvement de copeaux, étant prévus au niveau du support des moyens (2) pour la sollicitation au courant électrique ou des moyens pour la détermination d'une grandeur électrique, dans un procédé selon l'une quelconque des revendications 1 à 7.

11. Application du procédé selon les revendications 1 à 7 pour l'usinage par enlèvement de copeaux de pièces cylindriques, notamment de disques de freins et de tambours de freins.
